(19) Europäisches Patentamt
European Patent Office
Office européen des brevets

(11) **EP 4 290 415 A1**

(12) **EUROPEAN PATENT APPLICATION**

(43) Date of publication:
**13.12.2023 Bulletin 2023/50**

(21) Application number: **23174556.3**

(22) Date of filing: **22.05.2023**

(51) International Patent Classification (IPC):
**G06N 3/08** *(2023.01)* **G06N 3/09** *(2023.01)*
**G06N 5/01** *(2023.01)* **G06N 20/00** *(2019.01)*
**G06N 20/20** *(2019.01)* **G06Q 10/02** *(2012.01)*
**G06Q 10/10** *(2023.01)* **G06Q 50/12** *(2012.01)*
**G06Q 50/14** *(2012.01)* **G06F 18/214** *(2023.01)*

(52) Cooperative Patent Classification (CPC):
**G06N 20/20; G06F 18/214; G06N 5/01;
G06Q 10/02; G06Q 10/025; G06Q 10/10;
G06Q 50/12; G06Q 50/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.06.2022 IN 202221033166**

(71) Applicant: **Tata Consultancy Services Limited
Maharashtra (IN)**

(72) Inventors:
• **MANIVANNAN, SAKTHI PRIYA**
  **600096 Chennai, Tamil Nadu (IN)**
• **KUMARI, RASHMI**
  **560066 Bangalore, Karnataka (IN)**
• **FURTADO, PREMRAJ AGNELLO**
  **400076 Mumbai, Maharashtra (IN)**
• **NATARAJAN, NATARAJAN**
  **600113 Chennai, Tamil Nadu (IN)**

(74) Representative: **Goddar, Heinz J.
Boehmert & Boehmert
Anwaltspartnerschaft mbB
Pettenkoferstrasse 22
80336 München (DE)**

(54) **SYSTEM AND METHOD FOR REAL-TIME ALLOCATION OF ROOMS BASED ON CUSTOMER PREFERENCES**

(57)    Embodiments herein provide a method and system for a real-time allocation of a preferred room type based on one or more preferences of a customer. Every hotel maintains its own reservation database, the system gathers some of property management system (PMS) attributes of that day from the hotel administrator. The PMS attributes includes customer's booked room type, number of rooms booked, number of days customers will stay. Further, the system verifies all the preferences of the hotel and the different room type that are available for offering to customers on the day of check-in. A Check-in Check-Out model takes the attributes such as customers' reservation details, weather, arrival, and departure patterns of the customers from the transportation data store to predict the check-in and check-out time of the customers using pre-trained machine learning prediction models. A looping technique maps the rooms to the customers according to the preferred room types.

FIG. 5

**Description**

CROSS-REFERENCE TO RELATED APPLICATIONS AND PRIORITY

The present application claims priority from Indian patent application number 202221033166, filed on June 09, 2022.

TECHNICAL FIELD

The disclosure herein generally relates to the field of room management and more particularly, to a method and system for a real-time allocation of a preferred room type based on one or more preferences of a customer.

BACKGROUND OF THE INVENTION

When a customer requests a room with a set of preferences and priorities, it is not always possible that the customer will get such rooms. In general, the status of the booked rooms as well as the allocated rooms for customers are not always the same. On a daily basis, hotel administrators usually manually allot rooms to customers who are expected to arrive on that particular day, selecting the best possible allotment of rooms based on customer requirements. Secondly, when a customer applies for booking through online/offline mode the hotel administrator shares a list of rooms available on that particular day of booking. Due to unavailability of preferred room the customer ended-up booking another type of room.

Hospitality business is unique, wherein reservation of a room does not entitle or allocate a specific room in the facility till the date of arrival. This is unlike the adjoining industries like railways or airlines wherein a specific seat or berth can be allotted on reservation. Existing systems are not satisfying customer preferences regarding amenities and room types of the hotel since there is no mechanism to estimate actual check-out and check-in times of customers.

Further, there are no check-in and check-out prediction models, so there may be cases where customers have to wait for their rooms to get ready or not offered privileges as per loyalty offerings. In the existing solutions there is no mechanism to optimize turnaround time (TAT) or prioritizing of sequence clearance of hotel rooms between check-out and next check-in.

SUMMARY OF THE INVENTION

Embodiments of the disclosure present technological improvements as solutions to one or more of the above-mentioned technical problems recognized by the inventors in conventional systems. For example, in one embodiment, a method and system for a real-time allocation of a preferred room type based on one or more preferences of a customer is provided.

In one aspect, a processor-implemented method for a real-time allocation of a preferred room type based on one or more preferences of a customer. The processor-implemented method comprising receiving one or more details from the customer to allocate the room type at a preferred facility. The one or more details comprising one or more preferences of the customer for the room type, a date of booking, at least one booked room at the preferred facility, a date of arrival, a check-in-time, a date of departure, and a check-out-time. Herein, the at least one booked room is different than the predefined room. Further, the method comprising analyzing the received one or more details to create an assignment matrix with the one or more preferences of the room type and one or more descriptions of one or more rooms at the preferred facility, identifying at least one room type from the one or more rooms having the one or more preferences from the created assignment matrix to map with the customer, predicting a delay in a check-in and a check-out of one or more customers at the preferred facility on a particular day based on a weather, and an arrival and departure time of the transport using a pre-trained prediction model. The prediction model is trained based on a random forest regression technique. Furthermore, the method comprising a cumulative time adjustment factor of the one or more check-out customers based on the predicted delay in check-in and check-out of one or more customers and allocating the room type in real-time to the customer at the preferred facility based on the calculated cumulative time adjustment factor.

In another aspect, a system for a real-time allocation of a preferred room type based on one or more preferences of a customer is provided. The system includes an input/output interface configured to receive one or more details from the customer to allocate the room type at a preferred facility, one or more hardware processors and at least one memory storing a plurality of instructions, wherein the one or more hardware processors are configured to execute the plurality of instructions stored in the at least one memory.

Further, the system is configured to analyze the received one or more details to create an assignment matrix with the one or more preferences of the room type and one or more descriptions of one or more rooms at the preferred facility, identify at least one room type from the one or more rooms having the one or more preferences from the created assignment matrix to map with the customer, predict a delay in a check-in and a check-out of one or more customers at the preferred facility on a particular day based on a weather, and an arrival and departure time of the transport using a pre-trained prediction model, calculate a cumulative time adjustment factor of the one or more check-out customers based on the predicted delay in check-in and check-out of one or more customers, and allocate the room type in real-time to the customer at the preferred facility based on the calculated cumulative time adjustment factor.

In yet another aspect, one or more non-transitory machine-readable information storage mediums are provided comprising one or more instructions, which when executed by one or more hardware processors causes a method for a real-time allocation of a preferred room type based on one or more preferences of a customer is provided. The processor-implemented method comprising receiving one or more details from the customer to allocate the room type at a preferred facility. The one or more details comprising one or more preferences of the customer for the room type, a date of booking, at least one booked room at the preferred facility, a date of arrival, a check-in-time, a date of departure, and a check-out-time. Herein, the at least one booked room is different than the predefined room. Further, the method comprising analyzing the received one or more details to create an assignment matrix with the one or more preferences of the room type and one or more descriptions of one or more rooms at the preferred facility, identifying at least one room type from the one or more rooms having the one or more preferences from the created assignment matrix to map with the customer, predicting a delay in a check-in and a check-out of one or more customers at the preferred facility on a particular day based on a weather, and an arrival and departure time of the transport using a pre-trained prediction model. The prediction model is trained based on a random forest regression technique. Furthermore, the method comprising a cumulative time adjustment factor of the one or more check-out customers based on the predicted delay in check-in and check-out of one or more customers and allocating the room type in real-time to the customer at the preferred facility based on the calculated cumulative time adjustment factor.

It is to be understood that the foregoing general descriptions and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of an exemplary system for a real-time allocation of a preferred room type based on one or more preferences of a customer, in accordance with some embodiments of the present disclosure.
FIG. 2 is a flow diagram to illustrate the system for booking at least one room at a predefined facility, in accordance with some embodiments of the present disclosure.
FIG. 3 is a flow diagram to estimate delay in check-in and check-out, in accordance with some embodiments of the present disclosure.
FIG. 4 is a flow diagram to illustrate the system for a real-time preferred room type allocation, in accordance with some embodiments of the present disclosure.
FIG. 5 is a flow chart to illustrate a method for a real-time allocation of a preferred room type based on one or more preferences of a customer, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The embodiments herein provide a method and system for a real-time allocation of a preferred room type based on one or more preferences of a customer/guest. It would be appreciated that a preferred room and a preferred room type hereinafter may be used interchangeably. Since every hotel maintains its own reservation database, thus the system gathers some of Property Management System (PMS) attributes of that day from the hotel administrators. The PMS attributes includes customer's booked room, number of rooms booked, number of days customers will stay. Further, the system verifies the one or more preferences of the customer and the different room type that are available for offering to customers on the day of check-in. A Check-In Check-Out (CICO) model takes the attributes such as reservation details of the customer, a weather, an arrival, and a departure of the transportation chosen by the one or customers to predict the check-in and check-out time of the one or more customers from the transportation data store using pre-trained prediction model. A looping technique takes the list of available rooms of different types based on predicted check-in and check-out time of the one or more customers on a particular day and then the rooms are getting mapped to the customer according to the preferred room types.

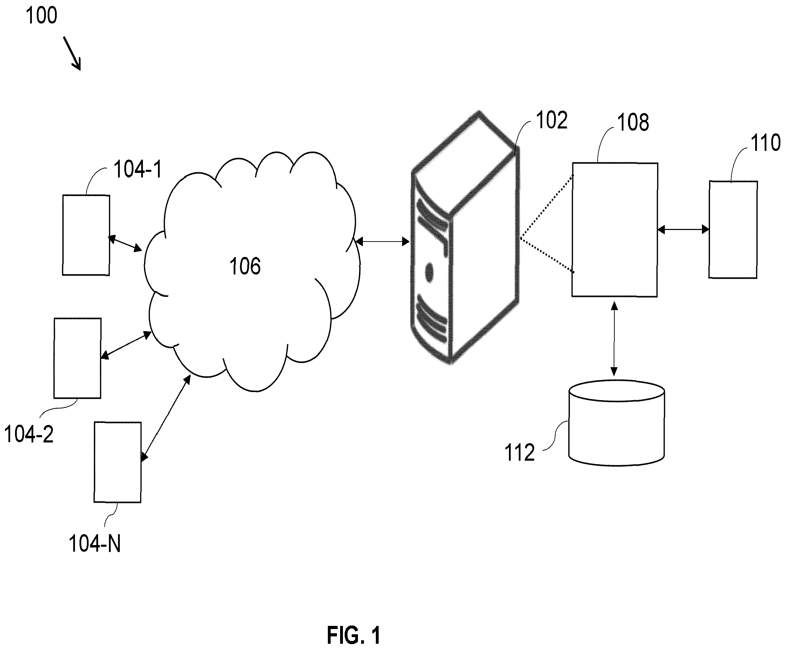

Referring now to the drawings, and more particularly to FIG. 1 through FIG. 5, where similar reference characters denote corresponding features consistently throughout the figures, there are shown preferred embodiments and these embodiments are described in the context of the following exemplary system and/or method.

FIG. 1 illustrates a block diagram of an exemplary system (100) for a real-time allocation of a preferred room type based on one or more preferences of a customer, in accordance with an example embodiment. Although the present disclosure is explained considering that the system (100) is implemented on a server, it may be understood that the system (100) may comprise one or more computing devices (102), such as a laptop computer, a desktop computer, a notebook, a workstation, a cloud-based computing environment and the like. It will be understood that the system (100) may be accessed through one or more input/output interfaces 104-1, 104-2... 104-N, collectively referred to as I/O interface (104). Examples of the I/O interface (104) may include, but are not limited to, a user interface, a portable computer, a personal digital assistant, a handheld device, a smartphone, a tablet computer, a workstation, and the like. The I/O interface (104) are communicatively coupled to the system (100) through a network (106).

In an embodiment, the network (106) may be a wireless or a wired network, or a combination thereof. In an example, the network (106) can be implemented as a computer network, as one of the different types of networks, such as virtual private network (VPN), intranet, local area network (LAN), wide area network (WAN), the internet, and such. The network (106) may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network (106) may include a variety of network devices, including routers, bridges, servers, computing devices, storage devices. The network devices within the network (106) may interact with the system (100) through communication links.

The system (100) supports various connectivity options such as BLUETOOTH®, USB, ZigBee, and other cellular services. The network environment enables connection of various components of the system (100) using any communication link including Internet, WAN, MAN, and so on. In an exemplary embodiment, the system (100) is implemented to operate as a stand-alone device. In another embodiment, the system (100) may be implemented to work as a loosely coupled device to a smart computing environment. Further, the system (100) comprises at least one memory with a plurality of instructions, one or more databases (112), and one or more hardware processors (108) which are communicatively coupled with the at least one memory to execute a plurality of instructions therein. The components and functionalities of the system (100) are described further in detail.

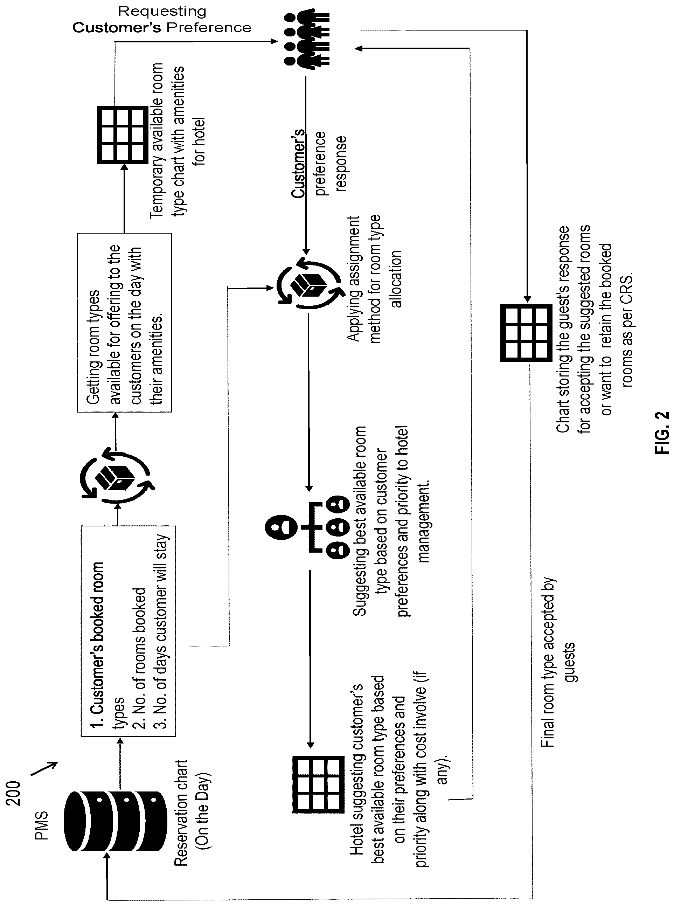

Referring FIG. 2, a flow diagram (200) to illustrate the system (100) for booking at least one of one or more rooms at the predefined facility, in accordance with some embodiments of the present disclosure. From the reservation chart, the system (100) gets the type of booked room of the customers, the number of rooms are booked and for how many days the customers have booked the room. Further. The system (100) verifies for all the amenities of the one or more rooms types that are available to offer to the customers on that day. It would be appreciated each hotel maintains a property management system (PMS) having one or more preferences of the customer and accordingly the system (100) suggests at the least one preferred room type to the customer based on the one or more preferences and priorities on an additional cost if any.

Herein, the one or more I/O interfaces (104) of the system (100) are configured to receive one or more details of a customer for allocating a predefined room at a predefined facility. The one or more details comprising one or more preferences of the predefined room, a date of booking, at least one booked room at the predefined facility, a date of check-in, a check-in-time, date of check-out, and a check-out-time. It is to be noted that at least one booked room is different than the predefined room.

In one embodiment, the system (100) is configured to analyze the received one or more details to create an assignment matrix with one or more preferences of the predefined room and one or more descriptions of the rooms at the predefined facility. In the assignment matrix, the customers preference data are along the rows while the one or more description of the hotel rooms are along columns of the assignment matrix.

In one instance, the system (100) is configured to calculate quantity of excess rooms (Q) by subtracting quantity of each room type from the customers' quantity and then to calculate excess number of days (D) by subtracting the number of days each room type is available from the number of days the customer wants to stay in the predefined facility. The system (100) ignores the one or more rooms for which the quantity value (Q) and the number of days (D) is greater than 0. The system (100) is considering only those rooms which are nearly or completely matching with the customers preference.

In another instance, the system (100) is configured to calculate the amenity difference (A) by subtracting the decimal value of preferences of each room type from the decimal value of preference provided by the customer and then summing up all those three values Q, D, and A in order to get the assignment matrix having integer values instead of binary notations. Further, considering those rooms only whose integral value's distance is closer to zero. For example:

(i) Case 1: 3 and -3 then -3 will be taken

(ii) Case 2: 1 and -5 then -5 will be taken

(iii) Case 3: -1, -7, -8, -6, -8, and -13, then -1 will be taken

(iv) Case 4: -5, -3, 0 then 0 will be taken directly

(v) Case 5: 3, 5, 2, 1, 13 then 1 will be taken.

In one illustration, the assignment matrix is created in which customers preference data are along the rows while the descriptions of hotel rooms are along columns.

| Customer Preferences | Room Type 1 | Room Type 2 | ••• | Room Type n |
|---|---|---|---|---|
| 6 - (TJ6491) - 2 - (1, 1, 1) | 3-(1,0,1)-2 | 6-(1,1,0)-4 | ... | 7-(0,1,1)-3 |

wherein, 6 - (TJ6491) - 2 - (1,1,1) = (customer's quantity of rooms) - (customer ID) - (number of days the customer wants to stay) - (amenities that customer wants in a room).

$$3 - (1,0,1) - 2 = \text{(total number of rooms available of that room type) - (room amenities) - (number of days those rooms are available)}$$

Therefore, Quantity of Excess Rooms (Q) = (6-3) = 3

Excess number of Days (D) = (2-2) = 0

Then, decimal value of customer's room amenity preferences $(1,1,1) = (1*2^2) + (1*2^1) + (1*2^0) = 7$

And decimal value of room amenities of a room type $(1,0,1) = (1*2^2) + (0*2^1) + (1*2^0) = 5$

So, the decimal equivalent of amenities difference (A) = (7-5) = 2

And then the room types with integral value for each customer will be = (Q) + (A) + (D) = 3 + 2 + 0 = 5

Further, the system (100) is configured to find out the minimal value of each row and then subtract that value from each element of that row. A minimal value of each column is identified and then subtracted that value from each element of that column. After subtracting minimum row and column values of each row and column from each element of those rows and columns, horizontal and vertical lines are drawn in order to check whether the minimum number of lines required to cover all zeros are equal to number of rows in the assignment matrix or not.

In yet another instance, if the number of horizontal and vertical lines required to cover all zeroes are not equal to the number of rows in the assignment matrix then the system (100) is configured to find the smallest element not covered by any of the lines, subtract the smallest element from all the uncovered elements, and add it to the elements at the intersection of the two lines. Other elements covered by the lines remain unchanged. Until all the zeroes got covered by the minimum number of horizontal and vertical lines which is also equal to the number of rows in the assignment matrix. Therefore, the system (100) allocates the preferred room type to the customers which are available based on the preference of one or more preferences.

In yet another embodiment, the system (100) is configured to determine at least one room having the one or more preferences from the created assignment matrix to map with the customer. The mapping provides a temporary chart with available predefined room.

In one example, wherein a customer X visits a hotel website for booking a suite room but ended up booking a deluxe room type. The system (100) fetches the customer reservation details from the PMS. If, the customer has not shared any preferences regarding room preferences, the system (100) may take either from historical data, or through a request-response mode, or a hybrid mode. The system (100) provides a list of available rooms to the hotel administrator based on the customer preferences and priorities using an assignment method. The hotel administrator may suggest a best available room type to the customer based on their preferences and priorities along with cost involve if any. Therefore, the system (100) stores the customer's response in a form of a chart whether the customer wants to accept the suggested room type or wants to retain the booked room type as per Central Reservation System (CRS).

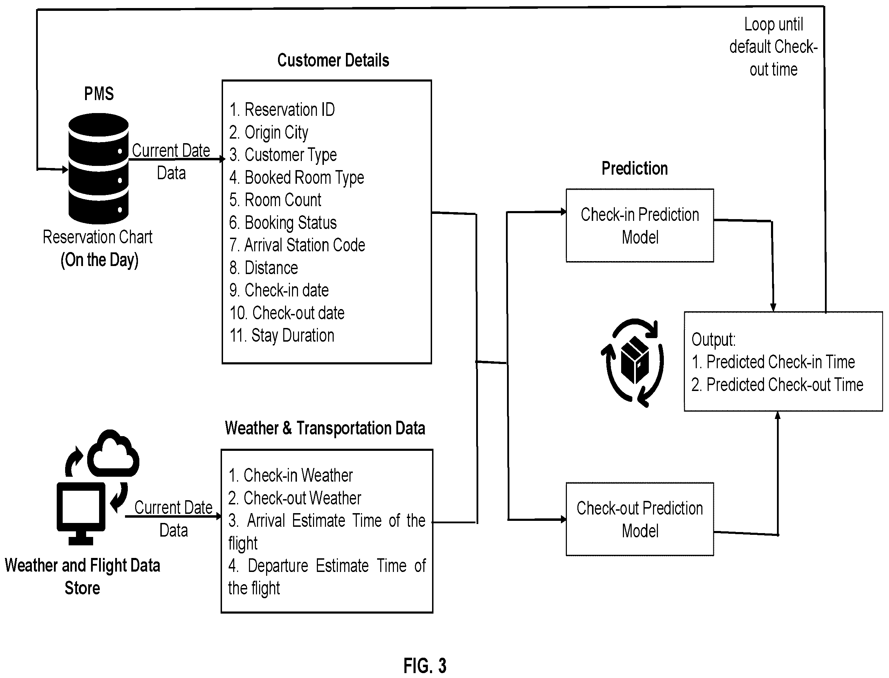

Referring FIG. 3, a flow diagram (300) to illustrate a delay in check-in and check-out time of the customer, in accordance with some embodiments of the present disclosure. Herein, the system (100) is configured to predict a delay in both check-in customer and a check-out customer based on a weather, an arrival and a departure time of the transport chosen by the one or more customers using a pre-trained prediction model. Herein, the prediction model is a machine learning based model, which is trained based on a random forest regression technique.

In order to train the prediction model, one or more attributes of the historical data are fetched from the PMS. A check-in time, a check-out time, an arrival, and departure time of the transport may be extracted from a weather and transportation data store. In a real-time, the system (100) fetches one or more attributes from the PMS to estimate a current day check-in and check-out time of the customers are stored into a temporary reservation database.

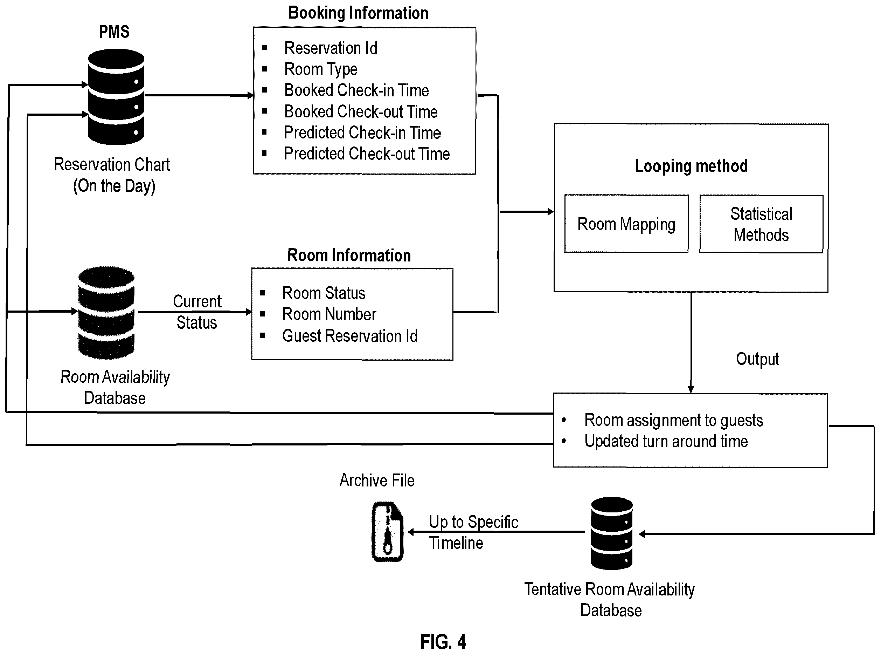

Referring FIG. 4, a flow chart to illustrate a real-time preferred room type allocation, in accordance with some embodiments of the present disclosure. looping technique takes the computed predicted check-in and check-out time of the customers and based on that the rooms are getting mapped to the customers according to their preferred room types.

Further, the system (100) is configured to calculate a predicted check-in check-out difference ($V$) as the summation of the difference between predicted check in time and predicted check out time for all the rooms.

$$V = \sum_{i=1}^{t}\left[(predicted\ check\ out\ time_i) - (predicted\ check\ in\ time_i)\right] \quad (1)$$

wherein $V$ is predicted check-in check-out difference and $t$ is number of rooms mapped to customers.

Further, the system (100) is configured to calculate delay at check-out time ($R$) as the summation of the difference between predicted check out time and booked check out time for all the rooms.

$$R = \sum_{i=1}^{t}\left[(predicted\ check\ out\ time_i) - (booked\ check\ out\ time_i)\right] \quad (2)$$

wherein, $R$ is delay at check-out time and $t$ is number of rooms mapped to customers.

Further, the system (100) is configured to calculate Going-Out Going-In (GOGI) of one or more customers based on the sum of the rooms that are allocated through mapping process where mapping is computed by the prior (First come first serve) assignment for check-in and check-out customers with reference to room types.

$$\text{GOGI} = \sum_{i=1}^{n}\sum_{j=1}^{m} MAP_{ij} \quad (3)$$

$$\text{MAP}_i = GO_i \rightarrow GI_i \quad (4)$$

wherein 'n' stands for room type and 'm' stands for the number of guests checking-out assigned to the number of guests checking-in.

In another embodiment, the system (100) calculates a cumulative time adjustment factor ($\delta$) of the check-out customer based on the predicted delay. The system (100) allows hotel administrator to offer a list of available rooms to the customer based on the one or more preferences of the room at a predefined location. Usually, the customer prefers to take but was not available at the time of booking.

$$\delta = (R - V) + (GOGI * TAT) \quad (5)$$

wherein $\delta$ cumulative time adjustment factor and TAT is defined as the difference between Scheduled check-out time and Scheduled check-in time.

In order to allocate preferred room type to the customer based on one or more preferences, the system (100) is configured to reduce cumulative time adjustment factor ($\delta$) value to 0. If the cumulative time adjustment factor ($\delta$) value becomes 0 that means the hotel administrator is able to offer preferred rooms to the customer based on one or more preferences and priorities by employing extra resources to make the room ready for the customer on time.

$$Updated\ TAT = (V - R) / (GOGI) \quad (6)$$

wherein Updated TAT is an improved performance on Turn Around Time that will make to reduce ($\delta$) value to 0.

In another embodiment, the system (100) is configured to assign the predefined room at the predefined facility based on the calculated cumulative time adjustment factor. In order to do room mapping, the customer preferred room type and booked room type must be the same. If the room types are of the same type, then a real time room assignment will happen for all customers. As a result, this may lead to the accuracy of the system (100).

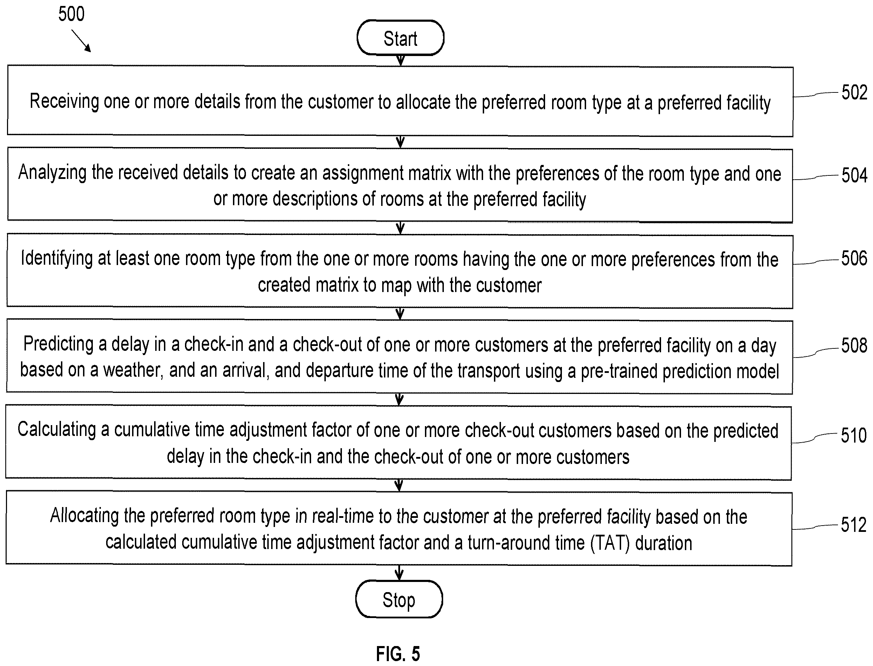

Referring FIG. 5, to illustrate a processor-implemented method (500) for a real-time allocation of a preferred room type based on one or more preferences of a customer is provided.

Initially, at step (502), receiving, via an input/output interface, one or more details from the customer to allocate the preferred room type at a preferred facility. The one or more details comprising one or more preference of the customer for a room, a date of booking, at least one booked room at the preferred facility, a date of arrival, a check-in-time, a date of departure, and a check-out-time.

At the next step (504), analyzing the received one or more details to create an assignment matrix with the one or more preferences of the preferred room type and one or more descriptions of one or more rooms at the preferred facility.

At the next step (506), identifying at least one preferred room type from the one or more rooms having the one or more preferences from the created assignment matrix to map with the customer. The mapping herein provides a temporary chart with available room type.

At the next step (508), predicting a delay in a check-in and a check-out of one or more customers at the preferred facility on a particular day based on a weather, and an arrival and departure time of the transport chosen by the one or more customers from a transportation data store using a pre-trained prediction model. The prediction model herein is trained based on a random forest regression technique.

At the next step (510), calculating a cumulative time adjustment factor of the one or more check-out customers based on the predicted delay in check-in and check-out of one or more customers.

At the last step (512), allocating a room number of the preferred room type in real-time to the customer at the preferred facility based on the calculated cumulative time adjustment factor.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address the problem of preferred room type allocation to a customer. The existing industry models do not focus on customer preferences regarding amenities and room types of the hotel since there is no mechanism to assign hotel rooms types to the customers while undergoing check-in process. Further, there are no check-in and check-out prediction models, so there may be cases where customers have to wait for their rooms to get ready before accommodation. In the existing models there is no mechanism to optimize turnaround time of hotel rooms between check-in and check-out. Embodiments herein provide a method and system for a real-time allocation of a preferred room type based on one or more preferences of a customer. Every hotel maintains its own reservation database, the system gathers some of PMS attributes of that day from the hotel administrator. The PMS attributes includes customer's booked room type, number of rooms booked, number of days customers will stay. Further, the system verifies all the preferences of the hotel and the different room type that are available for offering to customers on the day of check-in.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (500) for a real-time allocation of a preferred room type based on one or more preferences of a customer, the method comprising steps of:

   receiving (502), via an input/output interface, one or more details from the customer to allocate the preferred room type at a preferred facility, wherein the one or more details comprising one or more preferences of the customer for the preferred room type, a date of booking, at least one booked room at the preferred facility, a date of arrival, a check-in-time, a date of departure, and a check-out-time;
   analyzing (504), via one or more hardware processors, the received one or more details to create an assignment matrix with the one or more preferences of the room type and one or more descriptions of one or more rooms at the preferred facility;
   identifying (506), via the one or more hardware processors, at least one room type from the one or more rooms having the one or more preferences from the created assignment matrix to map a preferred room type to the customer, wherein the mapping provides a temporary chart with the identified at least one room type;
   predicting (508), via the one or more hardware processors, a delay in a check-in and a check-out of one or more customers at the preferred facility on a day based on a weather, and an arrival, and departure time of the transport using a pre-trained prediction model;
   calculating (510), via the one or more hardware processors, a cumulative time adjustment factor of one or more check-out customers based on the predicted delay in the check-in and the check-out of one or more customers; and
   allocating (512), via the one or more hardware processors, the preferred room type in real-time to the customer at the preferred facility based on the calculated cumulative time adjustment factor and a turn-around time (TAT) duration.

2. The processor-implemented method (500) of claim 1, wherein the at least one booked room is different than the room type.

3. The processor-implemented method (500) of claim 1, wherein the preferred facility includes one or more type of rooms.

4. The processor-implemented method (500) of claim 1, wherein the prediction model is trained based on a random forest regression technique.

5. The processor-implemented method (500) of claim 1, wherein the cumulative time adjustment factor is reduced and the TAT duration for the preferred room type is optimized which leads to an on-time allocation of the preferred room type to the customer.

6. A system (100) for a real-time allocation of a preferred room type based on one or more preferences of a customer comprising:

   an input/output interface (104) to receive one or more details from the customer to allocate the room type at a preferred facility, wherein the one or more details comprising one or more preference of the customer for a room, a date of booking, at least one booked room at the preferred facility, a date of arrival, a check-in-time, a date of departure, and a check-out-time;

a memory (110) in communication with the one or more hardware processors (108), wherein the one or more hardware processors are configured to execute programmed instructions stored in the memory to:

analyze the received one or more details to create an assignment matrix with the one or more preferences of the room type and one or more descriptions of one or more rooms at the preferred facility;

identify at least one room type from the one or more rooms having the one or more preferences from the created assignment matrix to map with the customer, wherein the mapping provides a temporary chart with available the room type;

predict a delay in a check-in and a check-out of one or more customers at the preferred facility on a day based on a weather, and an arrival and departure time of the transport using a pre-trained prediction model, wherein the prediction model is trained based on a random forest regression technique;

calculate a cumulative time adjustment factor of the one or more check-out customers based on the predicted delay in the check-in and the check-out of one or more customers; and

allocate the room type in real-time to the customer at the preferred facility based on the calculated cumulative time adjustment factor.

7. The system (100) of claim 6, wherein the at least one booked room is different than the room type.

8. The system (100) of claim 6, wherein the prediction model is trained based on a random forest regression technique.

9. The system (100) of claim 6, wherein the cumulative time adjustment factor is reduced and the TAT duration for the preferred room type is optimized which leads to an on-time allocation of the preferred room type to the customer.

10. A non-transitory computer readable medium storing one or more instructions which when executed by one or more processors on a system, cause the one or more processors to perform method comprising:

receiving, via an input/output interface, one or more details from the customer to allocate the room type at a preferred facility, wherein the one or more details comprising one or more preference of the customer for a room, a date of booking, at least one booked room at the preferred facility, a date of arrival, a check-in-time, a date of departure, and a check-out-time;

analyzing, via one or more hardware processors, the received one or more details to create an assignment matrix with the one or more preferences of the room type and one or more descriptions of one or more rooms at the preferred facility;

identifying, via the one or more hardware processors, at least one room type from the one or more rooms having the one or more preferences from the created assignment matrix to map with the customer, wherein the mapping provides a temporary chart with available the room type;

predicting, via the one or more hardware processors, a delay in a check-in and a check-out of one or more customers at the preferred facility on a particular day based on a weather, and an arrival and departure time of the transport using a pre-trained prediction model;

calculating, via the one or more hardware processors, a cumulative time adjustment factor of the one or more check-out customers based on the predicted delay in the check-in and the check-out of one or more customers; and

allocating, via the one or more hardware processors, the room type in real-time to the customer at the preferred facility based on the calculated cumulative time adjustment factor.

FIG. 1

200

PMS

Reservation chart
(On the Day)

1. Customer's booked room types
2. No. of rooms booked
3. No. of days customer will stay

Getting room types available for offering to the customers on the day with their amenities.

Temporary available room type chart with amenities for hotel

Requesting Customer's Preference

Hotel suggesting customer's best available room type based on their preferences and priority along with cost involve (if any).

Suggesting best available room type based on customer preferences and priority to hotel management.

Applying assignment method for room type allocation

Customer's preference response

Final room type accepted by guests

Chart storing the guest's response for accepting the suggested rooms or want to retain the booked rooms as per CRS.

FIG. 2

EP 4 290 415 A1

**Customer Details**

**PMS**

Reservation Chart
(On the Day)

Current Date Data

1. Reservation ID
2. Origin City
3. Customer Type
4. Booked Room Type
5. Room Count
6. Booking Status
7. Arrival Station Code
8. Distance
9. Check-in date
10. Check-out date
11. Stay Duration

**Prediction**

Check-in Prediction Model

Loop until default Check-out time

Output:
1. Predicted Check-in Time
2. Predicted Check-out Time

**Weather & Transportation Data**

**Weather and Flight Data Store**

Current Date Data

1. Check-in Weather
2. Check-out Weather
3. Arrival Estimate Time of the flight
4. Departure Estimate Time of the flight

Check-out Prediction Model

**FIG. 3**

FIG. 4

500

Start

Receiving one or more details from the customer to allocate the preferred room type at a preferred facility —502

Analyzing the received details to create an assignment matrix with the preferences of the room type and one or more descriptions of rooms at the preferred facility —504

Identifying at least one room type from the one or more rooms having the one or more preferences from the created matrix to map with the customer —506

Predicting a delay in a check-in and a check-out of one or more customers at the preferred facility on a day based on a weather, and an arrival, and departure time of the transport using a pre-trained prediction model —508

Calculating a cumulative time adjustment factor of one or more check-out customers based on the predicted delay in the check-in and the check-out of one or more customers —510

Allocating the preferred room type in real-time to the customer at the preferred facility based on the calculated cumulative time adjustment factor and a turn-around time (TAT) duration —512

Stop

FIG. 5

Europäisches
Patentamt

European
Patent Office

Office européen
des brevets

# EUROPEAN SEARCH REPORT

Application Number

EP 23 17 4556

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/117873 A1 (VAKHUTINSKY ANDREW [US] ET AL) 22 April 2021 (2021-04-22) <br> * paragraph [0004] - paragraph [0004] * <br> * paragraph [0016] - paragraph [0022] * <br> * paragraph [0027] - paragraph [0045] * <br> * paragraph [0048] - paragraph [0049] * <br> * paragraph [0088] - paragraph [0089] * <br> * figures 1,3 * <br> ----- | 1-10 | INV. <br> G06N3/08 <br> G06N3/09 <br> G06N5/01 <br> G06N20/00 <br> G06N20/20 <br> G06Q10/02 <br> G06Q10/10 <br> G06Q50/12 |
| X | US 2021/117998 A1 (CHO SANGHOON [US] ET AL) 22 April 2021 (2021-04-22) <br> * paragraph [0016] - paragraph [0016] * <br> * paragraph [0021] - paragraph [0043] * <br> * paragraph [0049] - paragraph [0052] * <br> * paragraph [0058] - paragraph [0058] * <br> * figure 1 * <br> ----- | 1-10 | G06Q50/14 <br> G06F18/214 |

TECHNICAL FIELDS
SEARCHED      (IPC)

G06N
G06Q
G06V
G06F

The present search report has been drawn up for all claims

| Place of search | Date of completion of the search | Examiner |
|---|---|---|
| Munich | 11 October 2023 | Melis, Caterina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 290 415 A1**

## ANNEX TO THE EUROPEAN SEARCH REPORT
## ON EUROPEAN PATENT APPLICATION NO.

EP 23 17 4556

11-10-2023

| Patent document cited in search report | | Publication date | Patent family member(s) | | Publication date |
|---|---|---|---|---|---|
| US 2021117873 | A1 | 22-04-2021 | CN | 113015985 A | 22-06-2021 |
| | | | JP | 2022552028 A | 15-12-2022 |
| | | | US | 2021117873 A1 | 22-04-2021 |
| | | | WO | 2021080668 A1 | 29-04-2021 |
| US 2021117998 | A1 | 22-04-2021 | CN | 113015986 A | 22-06-2021 |
| | | | JP | 2022552027 A | 15-12-2022 |
| | | | US | 2021117998 A1 | 22-04-2021 |
| | | | WO | 2021080669 A1 | 29-04-2021 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221033166